Europäisches Patentamt

(19) European Patent Office

Office européen des brevets

(11) Publication number: **0 231 588
B1**

# (12) EUROPEAN PATENT SPECIFICATION

(45) Date of publication of the patent specification:
16.05.90

(51) Int. Cl.⁵: **B29C 33/08**, B65H 75/50

(21) Application number: **86308071.9**

(22) Date of filing: **17.10.86**

(54) **Method of producing an at least partially sintered product.**

(30) Priority: **07.11.85 GB 8527465**

(43) Date of publication of application:
**12.08.87 Bulletin 87/33**

(45) Publication of the grant of the patent:
**16.05.90 Bulletin 90/20**

(84) Designated Contracting States:
**AT BE CH DE ES FR GB GR IT LI LU NL SE**

(56) References cited:
**FR-A- 1 384 271
FR-A- 1 470 124
GB-A- 1 060 908
GB-A- 2 010 165
US-A- 3 487 132**

**The file contains technical information submitted after the application was filed and not included in this specification**

(73) Proprietor: **POROUS PLASTICS LIMITED, Marbaix House Bessemer Road, Basingstoke, RG21 3NT(GB)**

(72) Inventor: **Davidson, Roderick Iain, Marbaix House, Bessemer Road Basingstoke, RG21 3NT(GB)**
Inventor: **Hornsby, Peter Ridsdale, 31 Manor Way, Chesham Buckinghamshire HP5 3BH(GB)**

(74) Representative: **Miller, Joseph et al, J. MILLER & CO. Lincoln House 296-302 High Holborn, London WC1V 7JH(GB)**

## Description

This invention concerns a method of producing an at least partially sintered product. Although the invention is not so restricted, it is more particularly concerned with the production of a core member for use in the dyeing of yarn. However, the invention may also be used to produce a variety of other products such as traffic cones, flower pots, drainage pipes and filtration members.

Known core members for the dyeing of yarn suffer from a number of disadvantages. Such core members have previously been made of impervious material, such as plastics material, having holes therein for the passage of the dye liquor, or have been made or steel wire formed to provide gaps through which the dye liquor passes. The yarn to be dyed has been wound onto such cores and has thus been supported by the said impervious material or steel wire. Consequently, the dye liquor has been unable to pass through those portions of the core member which engage the yarn, while the said portions have an "ironing" effect on the yarn.

A suggestion has been made in British Patent Specification No. 2 018 722A to deal with this problem by covering the core member with a sleeve of porous needlefelt material onto which the yarn to be dyed is wound so that the dye liquor which has passed through the holes or gaps in the core member is dispersed to some extent in the porous needlefelt material before contacting the yarn. The use of such a sleeve, however, does not ensure even dyeing throughout the wound yarn, whilst it also involves the use of an additional member which substantially increases costs both in respect of the provision of the sleeve itself and of its assembly and dis-assembly. Additionally, when the said sleeve of porous needlefelt material is supporting a package of yarn during either a dyeing process or any intermediate process, the yarn tends to collapse inwardly into the needlefelt material causing wastage of yarn. Furthermore, the porous nature of the needlefelt material is such that it does not have solid portions at its extremities. Consequently, the dye liquor will tend to flow through these extremities since they have no yarn wound on them and therefore offer the least resistance to the pressure.

In British Patent Specification No. 318 327 there is disclosed a core member constituted by a hollow reel or cylinder. The specification mentions that this reel or cylinder can itself be porous but does not indicate any suitable material from which such a porous reel or cylinder may be made and does suggest that such a structure may be "too weak". The specification also indicates that the reel or cylinder may be impervious and may be of iron, aluminium, or other metal, ceramic material, an artificial resin, such as phenol-formaldehyde resin, or hardened rubber, the impervious reel or cylinder being perforated and being covered by a porous coating of porous materials such as blotting paper, textile fabrics, asbestos, glass frits, or zeolite. It would clearly not be possible, however, to make the reel or cylinder itself from such porous materials since it would then certainly be "too weak".

In British Patent Specification No. 2 010 165B there is disclosed a method of producing a sintered product comprising introducing sinterable material into a microwave heatable mould and subjecting said mould to microwave radiation so as to heat the mould and thereby effect sintering of the sinterable material. This citation, however, suggests that only that part of the wall member of the mould which contacts the material to be moulded is microwave heatable. This means that the wall member of the mould has to be provided with a complicated cooling system to cool the remaining part of the wall member of the mould. Moreover, in order to provide the wall member of the mould with the said microwave heatable part, the citation suggests that the body of the said wall member should be formed by a resin having a filler of fibers, the said microwave heatable part of the wall member of the mould being constituted by a thin layer of resin containing 1-5% of carbon black. It would be very difficult, however, to distribute the carbon black uniformly and hot spots would almost inevitably be produced which would cause uneven sintering of the product. The method suggested in this citation would therefore be unsuitable for making the core member referred to above.

According, therefore, to the present invention, there is provided a method of producing an at least partially sintered product, comprising introducing sinterable material into a mould or die having at least one wall member which is adapted to produce a surface of the said product and which is microwave heatable, and subjecting said mould or die to microwave radiation so as to heat the mould or die and thereby effect at least partial sintering of the sinterable material, characterised in that the or each said wall member is made at least predominantly of microwave heatable material having a dielectric loss factor $\varepsilon''_{eff}$ at the frequency of said microwave radiation of at least 0.1, and having a thermal conductivity of at least 10 $Wm^{-1}K^{-1}$.

$\varepsilon''_{eff}$ may be defined as follows:-

$$\varepsilon^* = \varepsilon' - j\,\varepsilon''_{eff},$$

where $\varepsilon^*$ is the relative complex permittivity

$\varepsilon'$ is the dielectric constant, and

$\varepsilon''_{eff}$ is the effective loss factor.

If desired, the sinterable material may also be microwave heatable material.

Since the dielectric loss factor $\varepsilon''_{eff}$ at the frequency of said microwave radiation is at least 0.1, rapid heating of the wall member is possible without excessive voltage gradients. Moreover, since the thermal conductivity of the wall member is at least 10 $Wm^{-1}K^{-1}$, the risk of localised overheating is reduced.

The or each wall member preferably has a thermal shock resistance parameter R of at least 10. This feature enables the mould or die to be rapidly quenched after moulding without the introduction of high thermal stresses which might result in fracture of the mould.

The thermal shock resistance parameter R may be defined as follows:-

$$R = \frac{k \, \sigma \, (1 - \mu)}{E \, \alpha}$$

where k = thermal conductivity ($Wm^{-1}K^{-1}$)
$\sigma$ = rupture strength (MPa)
$\mu$ = Poisson's ratio
E = Young's modulus (GPa)
$\alpha$ = Thermal expansion coefficient ($\times 10^{-6}K^{-1}$)

The microwave heatable material may comprise a ceramic material, e.g. silicon carbide, silicon nitride or carbon. The silicon carbide is preferably produced by subjecting a mass of porous carbon or graphite to reaction with a silicon containing vapour.

The mould may have male and female wall members which are adapted to form a tubular product therebetween, one only of said wall members being microwave heatable.

The said product may be a self-supporting core member adapted to support a textile package. Preferably, a filament, yarn or wire is wound onto the surface of the core member to form the said textile package.

A core member made by the method of the present invention may thus readily be formed with an external surface that does not snag the yarn or filament. On the other hand, due to the at least partial sintering, this external surface will be sufficiently rough in nature so as to offer adequate friction for the regular build-up of the said package at the commencement of the winding of the yarn or filament. Thus although the initial winding of the yarn or filament onto the core member may be at an angle to the axis of the core member, there need be no slippage of the yarn or filament on the surface of the core member with the result that a regular package can be built up. Consequently, the invention permits the production of readily transportable wound bobbins.

Such a core member, moreover, may be produced at very low cost so as to permit one off use. This reduces the value of the core member inventory and removes the problem of having to send a customer yarn which has been wound onto an expensive core member whose return might be difficult to ensure.

Such core members, moreover, can be produced without expensive tooling so that it is easily possible to cater for a very large number of differently sized core members which are required in the industry.

The use of such microwave radiation, e.g. in the range 400 MHz to 10,000 MHz, in association with the use of a mould or die, e.g. a ceramic mould or die, having inherently high thermal conductivity of at least 10 $Wm^{-1}K^{-1}$ substantially reduces the incidence of hot spots, while the effect of any hot spots which do occur will be reduced by the high thermal conductivity of the material of the mould or die. Moreover the use of a mould or die having such an inherently high thermal conductivity enables the material in the mould or die, after it has been at least partially sintered, to be cooled rapidly and thus to be capable of being extracted rapidly from the mould or die. This is particularly important in the case of a thermoplastic moulding material.

Preferably, at least a portion of the core member is porous, the wound filament, yarn or wire being subjected to a treatment liquid which passes through the pores of the said portion. Thus the treatment liquid may be a dye liquor.

The reduction of the number of hot spots is very important in relation to the production of a porous core member since, where there is a hot spot, there will be a greater degree of sintering and therefore an irregularity in the porosity of the core member, leading to an unequal flow of dye liquor into the yarn.

In the case of the present invention, therefore, the sintering of the core member may be such that the dye liquor flows readily through the core member, and, due to the porous nature of the core member, the yarn contacting the core member will not be prevented by any portion of the latter from being open to the dye liquor. Furthermore, by reason of the porous nature of the core member, the pores in the core member provide the passages through which the dye liquor flows and thus it is not necessary, in contrast to known core members, to provide holes in the latter for the passage of the dye liquor. As indicated above, the use of such holes is very undesirable since the yarn is wound tightly onto the core member and consequently the latter, when provided with such holes, tends to have an "ironing" effect on the yarn.

A further advantage of such a porous core member is that it does not involve the need to mount a porous sleeve on the core member since the necessary filtration will be effected by the porous core member itself.

Yet a further advantage of a core member produced by the method of the present invention is that it may be made of materials such that the core member may be compressed axially so as to allow a plurality of such core members to be mounted on a die spindle to form a solid column of yarn. The material of the core member may, in the case of the present invention, also be such as to allow for radial compressibility so as to cater for the contraction of high shrinkage yarns.

As will be appreciated, the points of contact between the yarn or filament and the solid parts of the core member will be as small as possible by reason of the sintering of the core member so that the dye liquor can reach even the innermost layers of yarn.

As stated above, the mould or die is preferably formed at least predominantly of a microwave responsive ceramic material. The term "ceramic material" is intended to refer to any solid, chemically inorganic material, other than a pure metal or an alloy, which is rendered serviceable at some stage during its formation or manufacture through processing at a temperature of at least 500°C. The term "ceramic material" thus includes pottery, refractories, inorganic metallic oxides, nitrides and carbides, carbon, glass, cement and cement-based products. The preferred ceramic materials for the mould or die, however, are silicon nitride and, more particularly, silicon carbide.

The use of microwave radiation, in contrast to other forms of heating, enables the time taken to form the core member or other product to be considerably reduced and this in turn enables the core member or other product to be produced very inexpensively and with improved quality. In order to be able to use microwave radiation, however, it is desirable, if a satisfactory commercial product is to be obtained, to form at least one of the wall members of the mould or die at least predominantly from a material which has high microwave receptivity so that there will be a rapid rate of heating with a low power input; high thermal conductivity and thermal shock resistance to permit rapid rates of cooling and so as to ensure uniform heating such that hot-spots are avoided; ease of fabrication (e.g. by machining) into complex shapes; high resistance to deformation at high temperatures; low overall cost of manufacture; high durability in respect of strength, toughness and wear resistance; ability to withstand repeated heating to elevated temperatures while being inert to chemical attack; and high surface finish to facilitate release of the core member or other product from the mould or die. Properties of this sort are possessed in particular by silicon carbide, especially that marketed under the Trade Mark SILMOR by Morganite Special Carbons Limited.

SILMOR silicon carbide material is produced by the conversion of a mass of porous carbon or graphite to $\beta$-silicon carbide by reaction of the mass with silicon monoxide vapour whereby the surface carbon of said mass reacts with the silicon monoxide vapour to form silicon carbide in situ. This material, in addition to possessing the properties mentioned in the previous paragraph, has good resistance to material containing abrasive particles and has the following specification:

| Bulk Density | $2230 \ kg \ m^{-3}$ |
|---|---|
| Conversion depth up to | 5 mm |
| Hardness | 12+ (Moh's scale) |
| Temperature limit of operation | 1600°C |
| Thermal Expansion | $3.8\text{–}4.6 \times 10^{-6}\,°C^{-1}$ (25–1000°C) |
| Bend Strength | $89 \ MN \ m^{-2}$ |
| Youngs Modulus | $106 \ GN \ m^{-2}$ |
| Thermal Conductivity | $100 \ W \ m^{-1} \ K^{-1}$ |

In contrast, it would not be possible to use such a ceramic mould or die with other forms of dielectric heating such as radio frequency (RF) heating since this would be likely to lead to electrical breakdown due to the high voltage gradients experienced.

The use of RF heating would also produce severe problems in relation to hot spots.

The sinterable material may be particulate material or may be fibrous or filamentary material. Such material may be inherently polar material which is responsive to the said microwave radiation. Alternatively, the arrangement may be that the said material is not responsive to the said microwave radiation but is admixed or coated with further material which is so responsive. Thus the said further material may be carbon black, or aluminium silicate, or a metal oxide, e.g. $FE_3O_4$.

The sinterable material may comprise metallic, ceramic, glass or rubber material. Alternatively, the sinterable material may comprise polymeric particles, polypropylene or other thermoplastic particles.

The sinterable material may be admixed with a chemical foaming or blowing agent.

Preferably, after the mould or die has been heated for a length of time sufficient to achieve the said sintering it is cooled by directing fluid jets onto it.

The sinterable material may be introduced into the mould or die in the form of separate layers thereof which have differing sintering properties. Thus the material of all the said layers may be the same but the average particle sizes thereof may be different.

The sinterable material may comprise polymeric particles admixed with pigment particles. Moreover, the polymeric particles may be pre-heated to a temperature not exceeding their softening point prior to their introduction into the mould or die.

The mould or die may be simultaneously subjected to hot air and microwave heating.

The mould or die may be rotated during the sintering so as to effect biaxial rotation of the said sinterable material.

Different parts of the mould or die may be made of different ceramic materials which are respectively responsive to microwave radiation to different extents.

The sintering may be carried out in a non-oxidising atmosphere.

A core member produced by the method of the present invention is preferably tubular.

If desired, the thickness of the wall of the tubular core member may differ in different parts thereof.

Preferably, at least one end portion of the core member is substantially non-porous. The or each said end portion may be formed of sinterable material which is fully sintered during the sintering process, the central portion of the core member being incompletely sintered so as to be porous.

It will thus be appreciated that, the core member may be provided with non-porous end portions onto which the yarn is not wound so that the dye liquor is prevented from passing through portions of the core member where there is no yarn. Furthermore, these non-porous end portions may be formed simultaneously with the central porous portion.

Such porous and non-porous portions may be obtained by introducing into the mould material of different particulate sizes. Thus the end portions of the core member may be obtained by the introduction into the mould of a powder, while the central portion of the core member may be obtained by the introduction into the mould of larger particulate material.

As least one part of the core member may be coloured to provide an indication of the type of yarn which it is designed to carry. Thus the core member may have a plurality of differently coloured areas.

The core member may be formed to contract axially and/or radially when subjected to axial and/or radial pressure respectively. Thus the tubular inner and outer parts may be arranged to be telescoped into each other when the core member is subjected to axial pressure.

The outer part may have a frusto-conical internal surface which engages the external surface of the inner part.

The wall thickness of each of the inner and outer parts may vary axially so that the combined wall thickness of the inner and outer parts is substantially always the same irrespective of the extent to which the inner and outer parts are telescoped into each other.

The external surface of the core member may be recessed in at least one region so as to permit radial contraction of the core member when yarn wound on to the latter shrinks.

The method of the present invention may also be used to produce a porous pot for a plant within whose wall and/or base there is incorporated water-soluble material containing a plant nutrient or nutrients, the arrangement being such that if a plant is planted in the pot and the latter is stood in water, the water will permeate through the pot and gradually dissolve the water-soluble material so as to carry the nutrient or nutrients to the plant at a controlled rate.

The pot may be made of sintered plastics material. The water-soluble material, which may also contain an odorant or odorants, may be constituted by a soluble glass such as controlled release glass.

The invention also comprises a porous self-supporting core member adapted to form a textile package characterised in that the core member is a partially sintered member.

The invention additionally comprises a microwave heatable mould, or mould part, of silicon carbide material.

In this case, the silicon carbide material may be produced by subjecting a mass of porous carbon or graphite to reaction with a silicon containing vapour.

The invention also comprises use of silicon carbide as a microwave heatable material.

The invention is illustrated by the following Examples.

## EXAMPLE I

Polypropylene homopolymer chips of approximately 3mm diameter were formed into a perform by introducing them by means of a gravity feed into the space between the inner and outer walls of a hollow tubular ceramic mould made throughout from the above-mentioned silicon carbide material marketed under the Trade Mark SILMOR by Morganite Special Carbons Limited and having a dielectric loss factor $\varepsilon''_{eff}$ at the frequency of the microwave radiation to which it was subjected of at least 0.1 so that rapid heating of the mould was possible without excessive voltage gradients, having a thermal conductivity of at least 10 $Wm^{-1}K^{-1}$ so as to reduce the risk of localised overheating, and having a thermal shock resistance parameter R of at least 10 so that the mould could be rapidly quenched after moulding. The chips were lightly tamped in the mould to facilitate particle packing. The mould was introduced into a microwave oven which was provided with microwave energy of 2450 MHz and an output power of 1.5 kw. The silicon carbide mould and its contents were heated for 4 minutes so as to produce a self-supporting tubular polypropylene sintered core member having an interconnecting porous structure whose approximate pore size was up to about 1mm in diameter.

After moulding for the pre-set time of 4 minutes, cooling of the mould and of the polymer contained within it was achieved either by directing jets of air onto the external surface of the mould or, in some instances, by immersing the mould in water.

As will be appreciated, the polypropylene homopolymer chips themselves were substantially non-responsive to microwave radiation but were heated by reason of the fact that the mould itself was formed of silicon carbide which is responsive to microwave radiation.

Yarn (or, alternatively, either continuous filament or wire) was then wound onto the core member so produced so as to form a textile package. This textile package could then either be transported without further processing to a customer's factory, or other remote location or it could be subjected to a dye liquor or other treatment liquid which would pass through the porous structure referred to above.

EXAMPLE II

The process was the same as for Example I, but the polypropylene homopolymer, instead of being in the form of chips whose diameter was approximately 3 mm, was constituted by a powder whose average particle size was 250µm. The material was sintered in the mould for 3.5 minutes using a power of 1.5 kw and yielded an open porous structure whose approximate pore dimensions were 200µ.

EXAMPLE III

The process was the same as for Example II, but the sintering time was extended to 4¼ minutes as a result of which the core member was almost fully sintered with only limited closed cell porosity. In this case, of course, the core member so produced could not be used in a dyeing process.

EXAMPLE IV

The process was the same as in the case of either Example I or Example II, but in this case, the polypropylene homopolymer was premixed with 1% by weight of azodicarbonamide chemical blowing agent whose decomposition temperature was about 180°C. This mixture was heated in the microwave oven for 4¼ minutes in order to melt the polymer prior to the decomposition of the blowing agent. The subsequent foaming of the polymer which occurred resulted in the production of an integral skin closed cellular material or structural foam having an estimated density reduction of about 30% relative to the solid polymer.

EXAMPLE V

A sintered core member was produced by a process which was the same as in Example I except that the polypropylene was introduced into the mould in the form of three layers, i.e. a bottom layer of polypropylene powder (e.g. of the kind specified in Example II), a central layer of polypropylene homopolymer chips of approximately 3 mm diameter, and a top layer of the said polypropylene powder. The central layer occupied the great majority of the length of the preform. The subsequent sintering, which was as specified in Example I, resulted in the production of a sintered core member having substantially fully sintered ends but with an open porous structure in the central part thereof. Such a design of core member ensures added radial strength when yarn is wound onto the core member prior to dyeing.

Moreover, such a core member is provided with solid, i.e. non-porous, parts in those regions which do not come into contact with the yarn. Accordingly, the dye liquor is prevented from seeking the path of least resistance, i.e. those parts of the core member onto which the yarn is not wound. Thus the fully sintered ends both prevent the flow of the dye liquor therethrough and, at the same time, they provide greater hoop strength for the core member to withstand the pressures which are generated by certain types of yarn, e.g. polyester.

EXAMPLE VI

The process was the same as for Example V, but the polypropylene powder used in the top and bottom layers was pre-mixed with pigment particles prior to sintering and/or the polypropylene homopolymer chips of the central layer was precompounded with coloured pigments, e.g. phthalo-cyanine blue or green, prior to sintering. This produced a core member which was appropriately coloured, or colour coded, so as to indicate the nature of the yarn which was intended to be wound onto it.

EXAMPLE VII

The process was the same as in any of Examples I to VI, but in this case the polymer employed, which might be polypropylene or other non-microwave receptive polymer, was dosed with small amounts, e.g. 1 to 10% by weight, of a microwave receptive conductive or polar additive such as carbon black (e.g. Monarch 700 Black of Cabot Carbon Limited) or a metal oxide, e.g. iron oxide ($Fe_3O_4$). The mixing of this additive with the polymer was effected either by simple distributive pre-blending in the case of a powdered polymer, or by high intensity compounding in the case of the polymer chips, e.g. using an intermeshing co-rotating twin screw extruder to effect uniform dispersion and distribution of the polar or conductive additive in the polymer matrix. Following such compounding, the extrudate was pelletised and if necessary comminuted further to yield chips of the required dimensions for sintering.

The presence of the polar or conductive additive in operation caused additional heat to be generated in the polymer and this is beneficial if very rapid rates of sintering are required to yield either a porous structure or a completely fused polymer, particularly on thick section components.

It has been found by experimentation that the best results are obtained when the mould itself which is used for such mixtures of polymeric particles and polar or conductive additives is, in accordance with the present invention, a microwave receptive mould, as is the case of course when it is made of silicon carbide. In contrast, if a non-microwave receptive mould material such as PTFE is used for the moulding of polypropylene or other polymeric material dosed with a small amount of such a polar or conductive material, variable rates of sintering are liable to be achieved throughout the component due to conductive heat losses from the polymer to the cooler surrounding mould.

The coating or surface treatment of the polypropylene particles with a polar or conductive substance which is highly responsive to microwave energy ensures that the polymer particles are rapidly heated to a temperature in excess of the melting point of polypropylene which is 165°C. At the points of particle contact, polymer particles fuse together so as to produce a sintered structure. This use of a polar or conductive additive not merely increases the rate of sintering but also ensures that the heat is generated uniformly and only at the surface of the particles where it is needed and not throughout the bulk of the polymer. Thus cooling times are shorter than those required by normal sintering processes.

## EXAMPLE VIII

This process was the same as in any of Examples I to VI but in this case instead of using an inherently non-polar polymer such as polypropylene use was made of an inherently polar polymer constituted by polyvinyl chloride, the latter being sintered in a silicon carbide or other ceramic microwave receptive mould. The sintering was accelerated due to the internal heating from the polymer.

## EXAMPLE IX

The process was the same in any of Examples I to VIII but in this case the polymer was first pre-heated in a conventional (i.e. non-microwave) hot air circulating oven to a temperature not exceeding its softening point, was subsequently introduced into the ceramic microwave receptive mould, and was then sintered in the microwave oven by heating it therein for 3 minutes. This reduced the time taken to effect the required sintering in the microwave oven.

Alternatively, the heating of the mould could be effected in a combined hot air and microwave oven so that the mould was subjected to both forms of heating simultaneously.

## EXAMPLE X

The process was the same as for Example I but in this case a tubular moulding space was provided between concentric male and female mould parts, low density polyethylene chips whose average particle size was 500μm being introduced into the said tubular moulding space so as to form a tubular preform therein. The male mould part was made entirely of silicon carbide material marketed under the Trade Mark SILMOR as in Example I, but the female mould part was formed entirely of polytetrafluoroethylene (PTFE) which is transparent to, i.e. not heated by, microwave radiation. The mould and its contents were heated in the microwave oven for 2.5 minutes and were then cooled, as a result of which the polyethylene material had shrunk back onto the male mould part and was completely sintered so as to have a high gloss finish on the outer portion of the moulding. It should be appreciated that low density polyethylenes are substantially non-responsive to microwave heating, so that the complete sinter which was achieved was entirely due to the heat from the male mould part.

If the male and female mould parts are respectively made of microwave transparent material and microwave heatable material, it is anticipated that the sintered moulding will remain attached to the female mould part thus leaving a high gloss finish on the internal portion of the moulding.

In the majority of the Examples mentioned above, the same polymer particles are used throughout the mould. However, it is possible to employ different grades of polymer particles in different regions of the core member in order to impart specific properties such as strength, stiffness or flexibility to particular parts of the core member. This can, for example, be achieved by using polymers of different molecular weights but the same chemical structure, or by the inclusion of reinforcing or toughening additives such as glass fibers or fillers, or by using polymers with differing molecular structures and differing properties. However, the polymers should have broadly similar melting ranges such as would be the case for example if polypropylene and ethylene-propylene rubber were used in different parts of the same core member.

It is possible to apply the method described above not only to thermoplastic polymers but also to thermosetting polymers (e.g. epoxy or polyester resins) or for the vulcanisation or cross-linking of rubber compositions.

Those parts of the mould where either more or less sintering is required may be made from either more or less microwave receptive material.

The sintering operations described above may be carried out in a predetermined environment, e.g. a nitrogen environment, in order to reduce the susceptability of the materials used to oxidation or degradation. This could be achieved, for example, by surrounding the mould with materials which generate such a predetermined environment but which are themselves transparent to microwave energy so that they do not absorb any of the energy available within the microwave oven.

The method of the present invention may be employed in the case of polymers with inherently high dielectric loss factors (e.g. chlorinated polyethylene neoprene) and chlorosulphonated polyethylene (Hypalon) or other elastomers to which polar additives such as carbon black or polyethylene glycol have been incorporated.

The microwave oven employed may be such as to heat tubular material on a continuous basis, e.g. by containing a compacted preform of polymer particles in a sleeve formed by a conveyor belt wrapping around the preform at the start of the oven and then unwrapping at the exit from the oven.

In addition to the polar additives described above, it is also possible for some applications to use α-cellulose, glycerol, water soluble polymers such as polyethylene glycol, and polyvinyl alcohol.

The incorporation of small quantities of a chemical blowing agent into an activated polypropylene composition is an effective way of ensuring a fine open cell structure in a sintered core member. This is especially so where the blowing agent is added to polypropylene power/α-cellulose or starch mixtures.

All the Examples discussed above employ polymeric particulate material but it is also possible to carry out the method of the present invention so as to produce sintered ceramics, sintered glasses, or sintered metals. It is also possible to apply the method of the present invention not only to thermoplastic polymers but also to thermosetting polymers (e.g. epoxy or polyester resins) or for the vulcanisation or cross-linking of rubber compositions.

The mould material, while being sintered in the microwave oven, may be subjected to biaxial rotation followed by biaxial rotation during a subsequent cooling stage. This can achieve substantial reductions in cycle time compared to more conventional rotational moulding technology. Moreover, those parts of the mould where either more or less sintering is required may be made from either more or less microwave receptive material. Such a process is particularly useful in the manufacture of dustbins.

Where the sintered product produced by the present invention is constituted by a product such as a porous flower pot or plant pot, the material of the sintered product may comprise one or more odorants. The product may also incorporate chemical substances or other nutrients which promote plant growth and which are mixed with a water-soluble material such as controlled release glass so that the nutrients can be released slowly over an extended period. That is to say, since the pot is porous it may be stood in a tray of water with the result that, as the water passes through the wall and/or base of the pot, it picks up an optimum dosage of nutrient over a given period of time.

Such a pot may be made of any colour or may have a number or differently coloured parts.

The method of the present invention is applicable to the production of a dye core as shown in the accompanying drawings, in which:-

Fig. 1 is a longitudinal sectional view of a two-part dye core in an expanded condition,
Fig. 2 is a longitudinal view of the dye core of Figure 1 in its axially contracted condition,
Fig. 3 is an end view of a radially compressible dye core, and
Fig. 4 is a side view of the radially compressible core member of Figure 3.

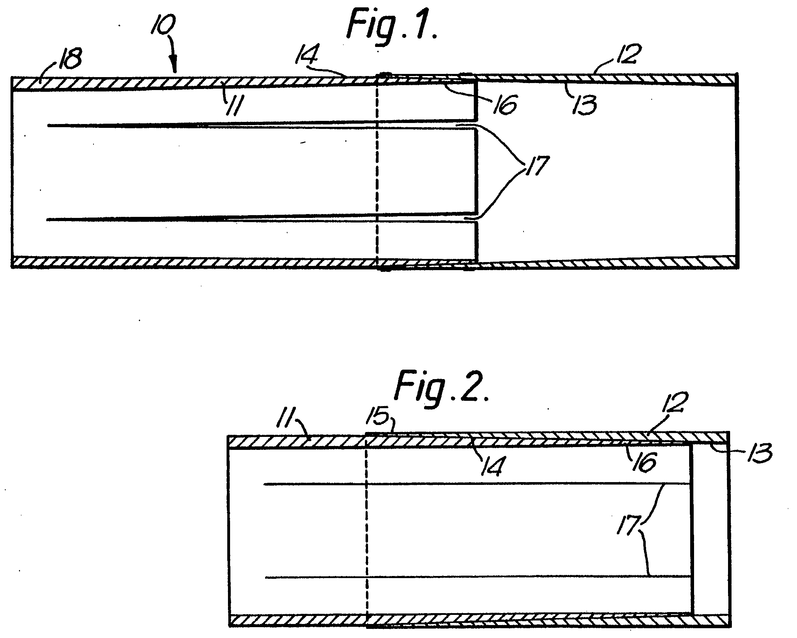

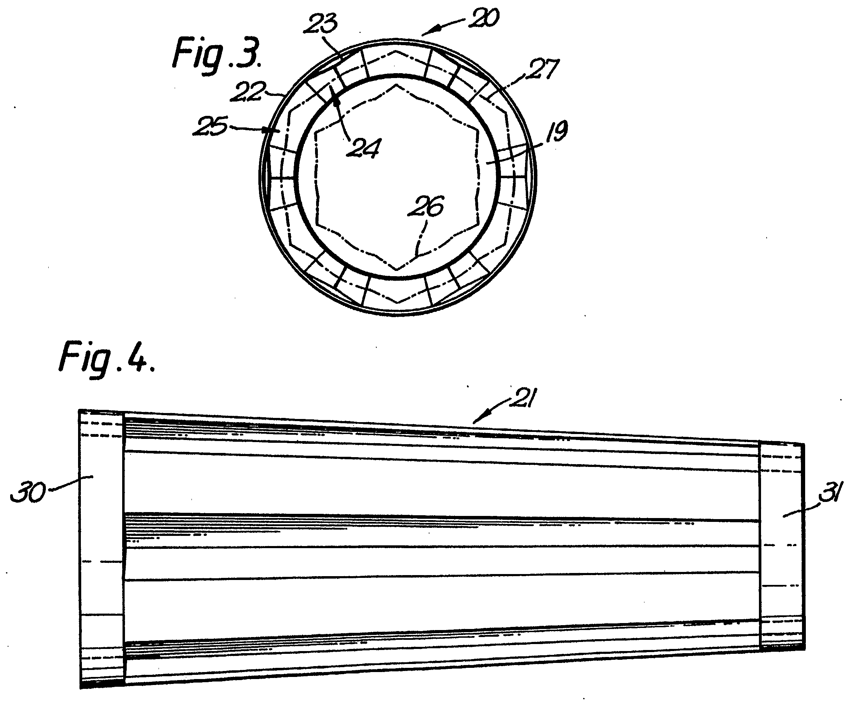

Referring to Figs. 1 and 2 of the drawings, a self-supporting tubular core member 10 comprises a tubular inner part 11 and a tubular outer part 12 which are arranged to be telescoped into each other when the tubular core member 10 is subjected to axial pressure. Each of the tubular inner and outer parts 11, 12 are constituted by a porous sintered member produced in accordance with the process of any of Examples I to IX. The tubular core member 10 is thus such as to have at least a central portion which is porous and onto which central portion yarn may be wound so that it may be dyed while on the central portion.

The outer part 12 has a frusto-conical internal surface 13 which engages the external surface 14 of the inner part 11. Consequently, when the core member is axially contracted, as shown in Figure 2, the end 15 of the outer part 12 rides over the external surface 14 of the inner part 11 so as to cause the end 16 of the inner part 11 to be contracted radially inwardly. To make this possible, the inner part 11 is provided with a plurality of equi-angularly spaced apart slots 17 whose width increases in the direction towards the outer part 12.

The core member shown in Figs. 1 and 2 is thus very suitable for use in the method of dyeing in which the yarn is wound onto the tubular core member 10 and the wound yarn is subjected to a dye liquor which passes through the pores of the inner and outer parts 11, 12.

The end portion 18 of the inner part 11 may be fully sintered by forming it, for example, of powdered polypropylene powder while the remainder of the inner part 11 may be formed from polypropylene chips, as described in Example V. This full sintering of the material in the end portion 18 will ensure that the dye liquor does not pass therethrough and will provide the inner part 11 with increased hoop strength.

The inner and outer parts 11, 12 may be coloured to provide an indication of the type of yarn which is to be wound onto the tubular core member 10, such colouration of the core member 10 being effected, for example, as described in Example VI.

Thus one may produce a core member having one single colour (e.g. red) indicating a particular type of yarn, or it may be differently coloured in different parts thereof for this purpose.

As will be seen from Figs. 1 and 2, the inner and outer parts 11, 12 are so formed that the wall thickness of each of the inner and outer parts varies axially so that the combined wall thickness of these parts is substantially always the same irrespective of the extent to which these parts are telescoped into each other.

In Figs. 3 and 4 there is shown a self-supporting tubular core member 20 constituted by a porous sintered member of plastics material produced in accordance with the process of any of Examples I to IX. The tubular core member 20 is thus such as to have at least a central portion 21 which is porous and onto which central portion a package 19 of yarn may be wound so that it may be dyed while on the central portion 21. When the wound yarn has been subjected to a dye liquor which has passed through the pores of the tubular dye core member 20, the yarn is liable to shrink and the tubular core member 20 is thus formed to be radially contractible.

For this purpose, the external surface 22 of the tubular core member 20 is recessed, as at 23, in a plurality of angularly spaced apart regions 24 which are arranged alternately with non-recessed regions 25. The yarn will contact only the non-recessed parts of the external surface 22 so that, if the yarn shrinks, the regions 24 will bow inwardly so as to radially contract and the yarn package 19 will have an approximately hexagonal internal surface 26 and external surface 27.

As shown in Fig. 4, the opposite ends 30, 31 of the tubular core member 20 may be fully sintered, as described in Example V, so as to ensure that the dye liquor does not pass therethrough and so as to provide the ends 30, 31 with increased hoop strength.

The tubular core member 20, like the tubular core member 10, may be coloured throughout, or may have a plurality of differently coloured parts, to provide an indication of the type of yarn which is to be wound onto it.

## Claims

1. A method of producing an at least partially sintered product, comprising introducing sinterable material into a mould or die having at least one wall member which is adapted to produce a surface of the said product and which is microwave heatable, and subjecting said mould or die to microwave radiation so as to heat the mould or die and thereby effect at least partial sintering of the sinterable material, characterised in that the or each said wall member is made at least predominantly of microwave heatable material having a dielectric loss factor $\varepsilon''_{eff}$ at the frequency of said microwave radiation of at least 0.1, and having a thermal conductivity of at least 10 $Wm^{-1}K^{-1}$.

2. A method as claimed in claim 1 in which the or each said wall member has a thermal shock resistance parameter R of at least 10.

3. A method as claimed in claim 1 or 2 in which the microwave heatable material comprises ceramic material.

4. A method as claimed in claim 3 in which the ceramic material is silicon carbide.

5. A method as claimed in claim 4 in which the silicon carbide is produced by subjecting a mass of porous carbon or graphite to reaction with a silicon containing vapour.

6. A method as claimed in any preceding claim in which the sinterable material is microwave heatable material.

7. A method as claimed in any preceding claim in which the mould has male and female wall members which are adapted to form a tubular product therebetween, one only of said wall members being microwave heatable.

8. A method as claimed in any preceding claim in which the sinterable material is admixed with a chemical foaming or blowing agent.

9. A method as claimed in any preceding claim in which the sinterable material is introduced into the mould or die in the form of separate layers thereof which have differing sintering properties.

10. A method as claimed in any preceding claim in which the mould or die is rotated during the sintering so as to effect biaxial rotation of the said sinterable material.

11. A method as claimed in any preceding claim in which different parts of the mould or die are made of different microwave heatable materials which are respectively responsive to microwave radiation to different extents.

12. A method as claimed in any preceding claim in which the said product is a self-supporting core member (10, 20) adapted to support a textile package.

13. A method as claimed in claim 12 in which a filament, yarn or wire is wound onto the surface of the core member (10, 20) to form a textile package.

14. A method as claimed in claim 13 in which at least a portion (11, 21) of the core member (10, 20) is porous, the wound filament, yarn or wire being subjected to a treatment liquid which passes through the pores of the said portion (11, 21).

15. A method as claimed in any of claims 12 to 14 in which at least one end portion of the core (18, 30, 31) is substantially non-porous.

16. A method as claimed in any of claims 12 to 15 in which the core member (10, 20) is formed to contract axially and/or radially when subjected to axial and/or radial pressure respectively.

17. A method as claimed in any of claims 1–13 in which the product is a traffic cone whose base is formed from a mixture of ballast and polymeric material.

18. A method as claimed in any preceding claim in which the sinterable material comprises soluble glass.

19. A mould, for use in producing an at least partially sintered product by the method of introducing sinterable material into the mould and subjecting the mould and sinterable material to microwave radiation at a predetermined frequency so as to heat the mould and thereby effect at least partial sintering of the sinterable material, having at least one microwave heatable wall member made at least predominantly of microwave heatable material having a dielectric loss factor $\varepsilon_{eff}$ at the predetermined microwave frequency of at least 0.1, and having a thermal conductivity of at least 10 $Wm^{-1}K^{-1}$.

20. A mould or die as claimed in claim 19 and incorporating the restriction of any of claims 2–5, 7, or 11.

## Patentansprüche

1. Verfahren zum Erzeugen eines zumindest teilweise gesinterten Erzeugnisses, aufweisend das Einführen eines sinterbaren Materials in eine Gußform oder eine Prägeform, die wenigstens ein Wandteil hat, welches ausgelegt ist, eine Fläche des Erzeugnisses zu erzeugen und das mit Mikrowellen beheizbar ist, und das Aussetzen der Gußform oder der Prägeform mit einer Mikrowellenbestrahlung, um so die Gußform oder die Prägeform zu erwärmen und dadurch ein zumindest Teil-Sintern des sinterbaren Materials zu bewirken, dadurch gekennzeichnet, daß das oder jedes der Wandteile aus zumindest vorwiegend mirkowellenerhitzbarem Material hergestellt ist, welches einen dielektrischen Verlustfaktor $\varepsilon''_{eff}$ bei einer Frequenz der Mikrowellenbestrahlung von wenigstens 0,1 und eine thermische Leitfähigkeit von wenigstens 10 $Wm^{-1}K^{-1}$ hat.

2. Verfahren nach Anspruch 1, bei dem das oder jedes der Wandteile einen Wärmeschock-Widerstandsparameter R von wenigstens 10 hat.

3. Verfahren nach einem der Ansprüche 1 oder 2, bei dem das mikrowellenerwärmbare Material ein keramisches Material umfaßt.

4. Verfahren nach Anspruch 3, wobei das keramische Material Siliziumkarbid ist.

5. Verfahren nach Anspruch 4, bei dem das Siliziumkarbid erzeugt wird, indem eine Masse aus porösem Karbon oder Graphit einer Reaktion mit einem Silizium enthaltendem Dampf ausgesetzt wird.

6. Verfahren nach einem der vorhergehenden Ansprüche, bei dem das sinterbare Material ein mikrowellenerwärmbares Material ist.

7. Verfahren nach einem der vorhergehenden Ansprüche, bei dem die Gußform patrizenartige und matrizenartige Wandteile hat, die ausgelegt sind, ein rohrförmiges Erzeugnis zwischen sich auszubilden, wobei nur eines der Wandteile mikrowellenerwärmbar ist.

8. Verfahren nach einem der vorhergehenden Ansprüche, bei dem dem sinterbaren Material ein chemisch schäumendes oder treibendes Mittel beigemischt wird.

9. Verfahren nach einem der vorhergehenden Ansprüche, bei dem das sinterbare Material in die Gußform oder die Prägeform in der Form von getrennten Schichten desselben eingeführt wird, die unterschiedliche Sinterungseigenschaften haben.

10. Verfahren nach einem der vorhergehenden Ansprüche, bei dem die Gußform oder die Prägeform während des Sinterns derart rotiert wird, daß eine zweiachsige Rotation des sinterbaren Materials bewirkt wird.

11. Verfahren nach einem der vorhergehenden Ansprüche, bei dem unterschiedliche Teile der Gußform oder der Prägeform aus unterschiedlichen mikrowellenerwärmbaren Materialien gebildet sind, die jeweils auf Mikrowellenbestrahlung in unterschiedlichem Ausmaß ansprechen.

12. Verfahren nach einem der vorhergehenden Ansprüche, bei dem das Erzeugnis ein selbsttragendes Kernelement (10, 20) ist, welches ausgelegt ist, ein Textilpaket zu tragen.

13. Verfahren nach Anspruch 12, bei dem eine Faser, ein Garn oder ein Draht auf die Fläche des Kernelementes (10, 20) gewickelt ist, um ein Textilpaket zu bilden.

14. Verfahren nach Anspruch 13, bei dem zumindest ein Abschnitt (11, 21) des Kernelementes (10, 20) porös ist, wobei die gewickelte Faser, das gewickelte Garn oder der gewickelte Draht einer Behandlungsflüssigkeit ausgesetzt wird, die durch die Poren des Abschnittes (11, 21) läuft.

15. Verfahren nach einem der Ansprüche 12 bis 14, bei dem zumindest ein Endabschnitt des Kerns (18, 30, 31) im wesentlichen nicht porös ist.

16. Verfahren nach einem der Ansprüche 12 bis 15, bei dem das Kernelement (10, 20) geformt ist, um sich axial und/oder radial zusammenzuziehen, wenn es einem jeweiligen axialen und/oder radialen Druck ausgesetzt wird.

17. Verfahren nach einem der Ansprüche 1 bis 13, bei dem das Erzeugnis ein gewerbsmäßiges Kegel ist, dessen Basis aus einer Mischung aus Ballast und polymerem Material gebildet ist.

18. Verfahren nach einem der vorhergehenden Ansprüche, bei dem das sinterbare Material lösliches Glas umfaßt.

19. Gußform zum Gebrauch beim Herstellen eines zumindest teilweise gesinterten Erzeugnisses mittels des Verfahrens des Einführens eines sinterbaren Materials in die Gußform und des Aussetzens der Gußform und des sinterbaren Materials einer Mikrowellenbestrahlung einer vorbestimmten Frequenz, um so die Gußform zu erwärmen und dadurch ein zumindest Teil-Sintern des sinterbaren Materials zu bewirken, wobei die Gußform zumindest ein mikrowellenerwärmbares Wandelelement hat, welches zumindest vorherrschend aus mikrowellenerwärmbarem Material hergestellt ist, welches einen dielektrischen Verlustfaktor $\varepsilon''_{eff}$ bei einer vorbestimmten Mikrowellenfrequenz von wenigstens 0,1 und eine thermische Leitfähigkeit von wenigstens 10 $Wm^{-1}K^{-1}$ hat.

20. Gußform oder Prägeform nach Anspruch 19, die die Einschränkungen einer der Ansprüche 2 bis 5, 7 oder 11 eingebaut hat.

## Revendications

1. Procédé pour produire un produit au moins partiellement fritté, consistant à introduire un matériau frittable dans un moule ou matrice ayant au moins une paroi adaptée pour produire une surface du produit et qui peut être chauffée par hyperfréquences et à soumettre ce moule ou matrice à un rayonnement hyperfréquence de façon à chauffer le moule ou matrice et effectuer ainsi un frittage au moins partiel du matériau frittable, caractérisé en ce que la ou chaque paroi est, au moins en majeure partie, en un matériau pouvant être chauffé par hyperfréquences ayant un facteur de perte diélectrique $\varepsilon''_{eff}$ pour la fréquence de ce rayonnement hyperfréquence d'au moins 0,1 et ayant une conductibilité thermique d'au moins 10 $Wm^{-1}K^{-1}$.

2. Procédé selon la revendication 1, dans lequel la ou chaque paroi a un paramètre R de résistance aux chocs thermiques d'au moins 10.

3. Procédé selon la revendication 1 ou la revendication 2, dans lequel le matériau pouvant être chauffé par hyperfréquences est un matériau céramique.

4. Procédé selon la revendication 3, dans lequel le matériau céramique est du carbure de silicium.

5. Procédé selon la revendication 4, dans lequel le carbure de silicium est produit en soumettant une masse de carbone ou de graphite poreux à une réaction avec une vapeur contenant du silicium.

6. Procédé selon l'une quelconque des revendications précédentes, dans lequel le matériau frittable est un matériau pouvant être chauffé par hyperfréquences.

7. Procédé selon l'une quelconque des revendications précédentes, dans lequel le moule a des parois mâle et femelle qui sont adaptées pour former entre elles un produit tubulaire, l'une seulement de ces parois pouvant être chauffée par hyperfréquences.

8. Procédé selon l'une quelconque des revendications précédentes, dans lequel le matériau frittable est mélangé avec un agent chimique moussant ou gonflant.

9. Procédé selon l'une quelconque des revendications précédentes, dans lequel le matériau frittable est introduit dans le moule ou la matrice sous la forme de couches séparées qui ont différentes propriétés de frittage.

10. Procédé selon l'une quelconque des revendications précédentes, dans lequel le moule ou la matrice est entraîné en rotation pendant le frittage de façon à effectuer une rotation bi-axiale de ce matériau frittable.

11. Procédé selon l'une quelconque des revendications précédentes, dans lequel différentes parties du moule ou de la matrice sont en des matériaux pouvant être chauffés par hyperfréquences différents, qui sont respectivement sensibles à des degrés différents au rayonnement hyperfréquence.

12. Procédé selon l'une quelconque des revendications précédentes, dans lequel le produit est un mandrin autoporteur (10, 20) adapté pour supporter un paquet de textile.

13. Procédé selon la revendication 12, dans lequel un filament, un fil ou un fil métallique est enroulé sur la surface du mandrin (10, 20) pour former un paquet de textile.

14. Procédé selon la revendication 13, dans lequel au moins une portion (11, 21) du mandrin (10, 20) est poreuse, le filament, le fil ou le fil métallique enroulé étant soumis à un liquide de traitement qui passe à travers les pores de cette portion (11, 21).

15. Procédé selon l'une quelconque des revendications 12 à 14, dans lequel au moins une portion terminale (18, 30, 31) du mandrin est pratiquement non poreuse.

16. Procédé selon l'une quelconque des revendications 12 à 15, dans lequel le mandrin (10, 20) est formé pour se contracter axialement et/ou radialement lorsqu'il est soumis respectivement à une pression axiale et/ou radiale.

17. Procédé selon l'une quelconque des revendications 1 à 13, dans lequel le produit est une balise conique de signalisation, dont la base est formée d'un mélange de ballast et de matériau polymère.

18. Procédé selon l'une quelconque des revendications précédentes, dans lequel le matériau frittable est du verre soluble.

19. Moule destiné à être utilisé pour produire un produit au moins partiellement fritté par le procédé consistant à introduire un matériau frittable dans le moule et à soumettre le moule et le matériau frittable à un rayonnement hyperfréquence à une fréquence prédéterminée, de façon à chauffer le moule et, de ce fait, effectuer un frittage au moins partiel du matériau frittable, ayant au moins une paroi pouvant être chauffée par hyperfréquences faite, au moins en majeure partie, d'un matériau pouvant être chauffé par hyperfréquences, ce matériau ayant un facteur de perte diélectrique $\varepsilon_{eff}$ à la fréquence du rayonnement hyperfréquence prédéterminée d'au moins 0,1 et ayant une conductibilité thermique d'au moins 10 $Wm^{-1}K^{-1}$.

20. Moule ou matrice selon la revendication 19 comportant les caractéristiques de l'une quelconque des revendications 2 à 5, 7 ou 11.

Fig.1.

Fig.2.

EP 0 231 588 B1

Fig.3.

Fig.4.

EP 0 231 588 B1